# EUROPEAN PATENT SPECIFICATION

(11) **EP 1 569 314 B1**
(45) Date of publication and mention of the grant of the patent: **29.08.2007**
(21) Application number: 04425125.4
(22) Date of filing: 27.02.2004
(51) Int. Cl.: H02H 3/33, H02H 3/06

(54) **Automatic reset device particularly for residual current-operated circuit breakers and the like**
Automatische Wiedereinschaltvorrichtung, insbesondere für Fehlerstromschutzschalter und Ähnlich
Dispositif de réenclenchement automatique, en particulier pour disjoncteurs de courant résiduel

(43) Date of publication of application: 31.08.2005
(73) Proprietor: GEWISS S.p.A., 24069 Cenate Sotto (Bergamo) (IT)
(72) Inventor: Bosatelli, Domenico, 24069 Cenate Sotto (Bergamo) (IT); Contardi, Augusto, 21100 Varese (IT)
(74) Representative: Forattini, Amelia

(56) References cited:
- DE-A- 19 858 601
- FR-A- 2 696 054
- US-A- 4 979 070

## Description

The present invention relates to an automatic reset device particularly for residual current-operated circuit breakers and the like. More particularly, the invention relates to a device that allows to reset automatically a residual current-operated circuit breaker following its release, after checking the correct operation of the system.

As is known, residual current-operated circuit breakers are normally provided in home and industrial systems in order to prevent a fault current from causing danger to users and to the loads connected to the electric line.

Essentially, the residual current-operated circuit breaker, when it detects the fault current, disconnects the line, accordingly interrupting the supply of power to the load or loads arranged downstream.

After the release of the residual current-operated circuit breaker, and once the correct operating conditions of the system have been restored, the residual current-operated circuit breaker must be reset.

The operating conditions often restore themselves spontaneously, because the fault is of a transient type caused by overvoltages.

Such reset normally occurs manually by acting on an appropriately provided reset lever.

However, if the user performs the reset after an opening or release of the residual current-operated circuit breaker, he cannot be sure that the fault has been removed. Therefore, when the user performs the reset, a subsequent closely spaced release of the residual current-operated circuit breaker can occur, because the problem has not been solved correctly.

US-4,979,070, which is considered to represent the closest prior art, discloses an automatic reset circuit for a Ground Fault Circuit Interrupter by means of which circuits are monitored after tripping of the GFCI and the GFCI is automatically reset when no fault conditions are detected.

It provides an automatic reset device particularly for residual current-operated circuit breakers and the like that allows to check the correct operation and status of the system before resetting the residual current-operated circuit breaker.

The prior art may provide an automatic reset device particularly for residual current-operated circuit breakers that provides the user with assurance of continuity of service by reclosing the residual current-operated circuit breaker after temporary faults, after checking the status of the system before performing the actual reset.

An object of the present invention is to provide an automatic reset device that is capable of checking the correct connection of the device itself to the system.

Another object of the present invention is to provide an automatic reset device that is highly reliable, relatively simple to provide and at competitive costs.

This aim and these and other objects that will become better apparent hereinafter are achieved by an automatic reset device as claimed in the appended claims.

Further characteristics and advantages of the invention will become better apparent from the description of a preferred but not exclusive embodiment of the reset device according to the present invention, illustrated by way of non-limiting example in the accompanying drawings, wherein:
Figure 1 is a general circuit diagram of the device according to the present invention;

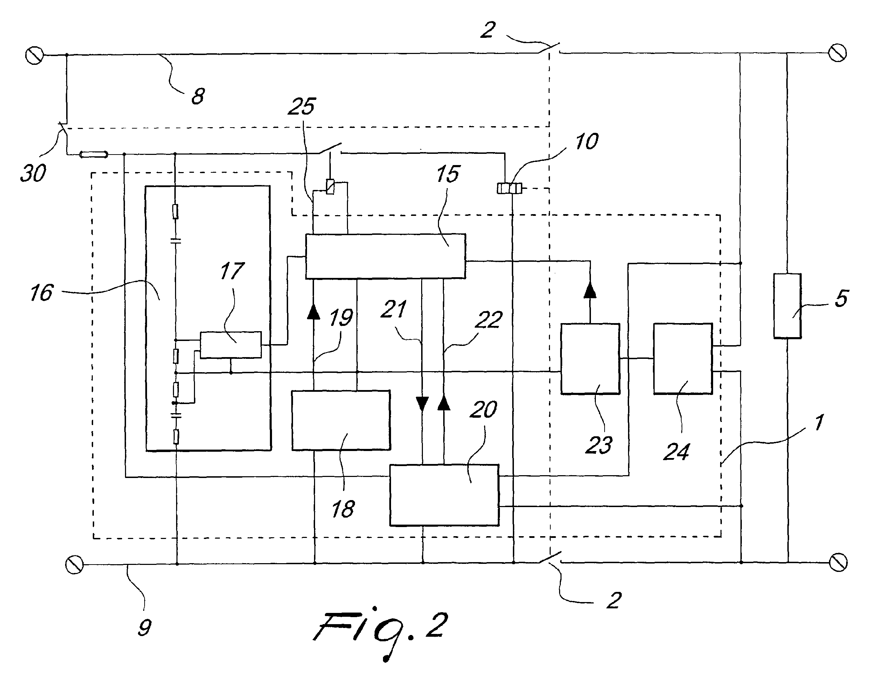

Figure 2 is a block diagram of the reset device according to the present invention; and

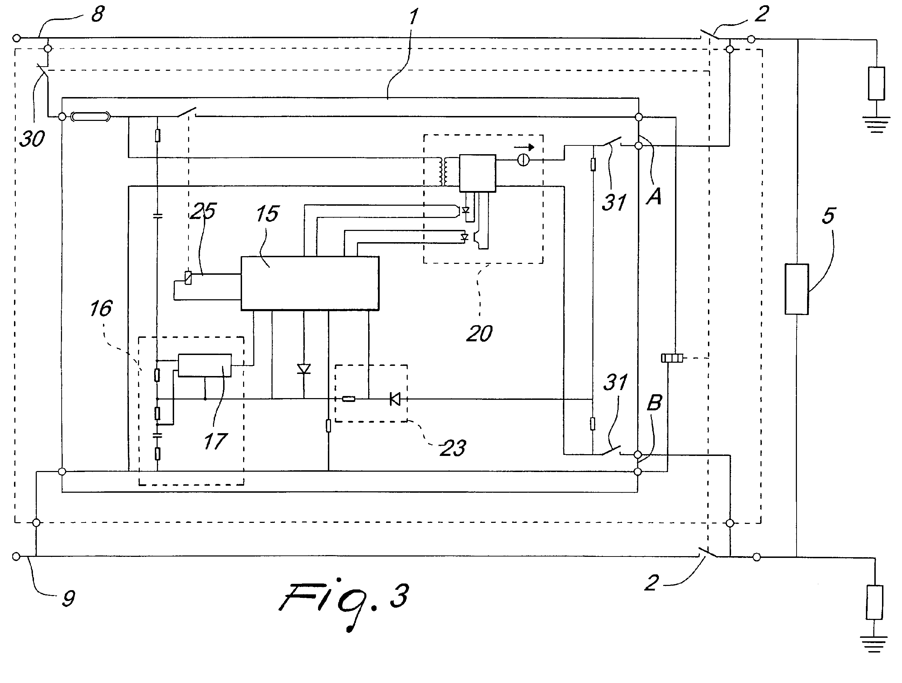

Figure 3 is a circuit diagram of the reset device according to the present invention.

With reference to the figures cited above, the reset device according to the present invention, associated with a residual current-operated circuit breaker, includes a control means 1, which is conveniently connected to a residual current-operated circuit breaker 2 by virtue of connections 3 and 4, which connect the control means 1 downstream of the residual current-operated circuit breaker 2 and upstream of a load 5 on one side and upstream of the residual current-operated circuit breaker 2 by virtue of connections 6 and 7 on the other side, so as to bypass the residual current-operated circuit breaker, without any connection to the ground system.

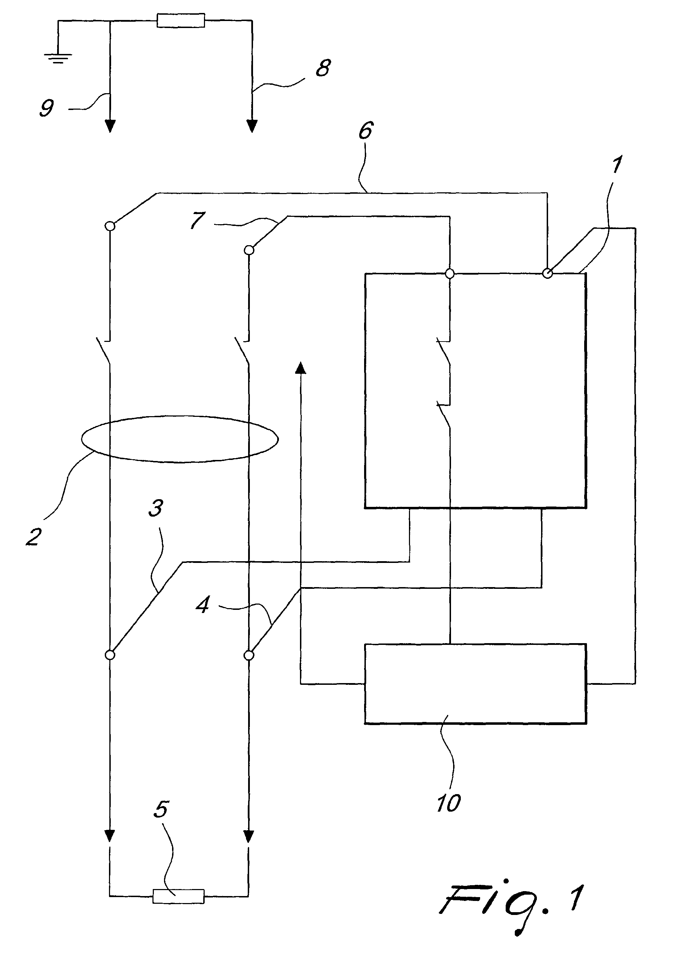

Figure 1 and the other figures show the electrical line with the phase 8 and the neutral 9.

The control means 1, conveniently constituted by a control board, is therefore interposed between the electrical line and the residual current-operated circuit breaker 2 and between the residual current-operated circuit breaker 2 and the load 5, accordingly constituting a bypass of the residual current-operated circuit breaker.

An actuation means 10, suitable to actuate the resetting of the residual current-operated circuit breaker 2, is connected to the control board 1 and powered by the line 8, 9 by virtue of the connection of the control board 1 to the line.

In detail, the control means 1 includes a control unit 15, which is connected to a power supply means 16 so as to derive a control voltage that is equal to half the mains supply voltage of the device. The power supply means furthermore includes a power supply 17 for the control unit.

The device furthermore has a circuit for detecting the presence and value of the power supply voltage, designated by the reference numeral 18, which is connected to the control unit 15 and sends to the control unit a response signal 19 related to the presence and value of the supply voltage.

A circuit 20 for checking the cables connected to the system, electrically separated from the remaining circuit, is furthermore connected to the control unit 15 in order to verify the correct connection of the cables, i.e., verify that the reset device is correctly connected to the system.

The circuit 20 receives in input a signal 21 requesting a check of the connection of the cables and sends in output to the control unit 15 a signal 22 that indicates the outcome of the cable check.

The device according to the invention furthermore includes a circuit 23 for detecting the leakage current of the connected system; this detection occurs by virtue of a unidirectional pulsed voltage derived from the mains voltage, which is closed, in case of fault, on the mains by virtue of the ground; finally, the device includes a circuit 24 for protection against electrical shocks during the system verification cycle.

The control unit 15 sends an actuation signal 25 to the thermal actuator 10 in order to activate the reset device.

With reference to the figures cited above, the operation of the reset device according to the present invention is as follows.

The control means 1 is supplied with power by the closure of a contact 30 exclusively after release of the associated residual current-operated circuit breaker, which opens the contacts 2 and removes power from the system.

The control means closes immediately a relay 31, connecting the system to be verified to the previously described measurement circuits.

The control unit 15 sends a signal requesting a check of the cables 21 to the control circuit 20, which checks the connection of the cables, verifying that there is an impedance between test points A and B. This verification indicates correct connection of the device to the system before continuing the test sequence. An impedance value exceeding a preset value prevents the reset device from continuing the sequence.

At this point, the control unit 15 verifies, by virtue of the circuit 23, the possible presence of an earth leakage current, and if the earth leakage current exceeds a preset threshold it blocks the automatic reclosure of the device.

If one of the two verifications described above fails, the device reports the anomaly by switching on a LED with a steady light.

If the entire first step ends with a positive outcome, the control unit provides power to the thermal actuator 10 in order to reset the device. Such thermal actuator is a hot-wax actuator, which resets the associated residual current-operated circuit breaker, accordingly supplying power to the system connected thereto.

If the residual current-operated circuit breaker trips a second time within a preset time, the reset device does not attempt a second reset and remains in a blocked status, which is indicated by the fixed lighting of the above cited LED, until the associated circuit breaker is reset manually.

Substantially, the automatic reset device according to the present invention allows to check both the connection of the reset device and any occurring leakage current before being able to actually actuate the automatic reset of the residual current-operated circuit breaker.

In practice it has been found that the device according to the present invention fully achieves the intended aim and objects, since it allows to perform, prior to an automatic reset operation, a series of checks on the device and on the system in order to perform a reset if the conditions are such as to ensure subsequent correct operation of the system.

The device thus conceived is susceptible of numerous modifications and variations, all of which are within the scope of the claims.

In practice, the materials used, as well as the contingent shapes and dimensions, may be any according to the requirements and the state of the art.

## Claims

1. An automatic reset device, particularly for residual current-operated circuit breakers and the like, which comprises an actuator for automatically resetting a residual current-operated circuit breaker that is connected to an electrical line, upstream of a load, comprising control means adapted to actuate said actuator, said control means being connected upstream of said residual current-operated circuit breaker and downstream of the residual current-operated circuit breaker, upstream of said load, in order to bypass said residual current-operated circuit breaker when said residual current-operated circuit breaker is released, said control means comprising a circuit for checking the connection of said reset device to the electrical line and a circuit for detecting leakage current, in order to check for the presence of a leakage current, before actuating said actuator to reset said residual current-operated circuit breaker; **characterised in that** said control means are connected to said electrical line by interposing a circuit breaker that is suitable to close, following the release of said residual current-operated circuit breaker.

2. The device according to claim 1, **characterized in that** said control means further comprises a circuit for detecting the presence and value of the power supply voltage.

3. The device according to claim 1, **characterized in that** said control means comprises a control unit that is suitable to drive said actuator.

4. The device according to one or more of the preceding claims, **characterized in that** said control means comprises a power supply circuit with a central tap that draws a voltage equal to half the mains voltage and recloses on said mains by virtue of the earth fault, if present.

5. The device according to claim 4, **characterized in that** the signal used for said check, which is derived from the mains voltage, is of the pulsed unidirectional type.

6. The device according to one or more of the preceding claims, **characterized in that** said actuator is a thermal actuator.

7. The device according to one or more of the preceding claims, **characterized in that** it comprises a circuit for protection against electrical shocks.

8. The device according to one or more of the preceding claims, **characterized in that** said circuit for controlling the connection of said reset device to said electrical line is electrically separated within said reset device.

## Patentansprüche

1. Automatische Rückstellvorrichtung, insbesondere für Fehlerstrom-Schutzschalter und dergleichen, die ein Betätigungselement für ein automatisches Rückstellen eines Fehlerstrom-Schutzschalters umfasst, der vor einem Verbraucher an eine Stromleitung angeschlossen ist, umfassend eine Steuer/Regeleinrichtung, die für die Aktivierung des Betätigungselements geeignet ist, wobei die Steuer/Regeleinrichtung vor dem Fehlerstrom-Schutzschalter und nach dem Fehlerstrom-Schutzschalter vor den Verbraucher geschaltet ist, um den Fehlerstrom-Schutzschalter zu überbrücken, wenn der Fehlerstrom-Schutzschalter ausgelöst wird, wobei die Steuer/Regeleinrichtung eine Schaltung zum Überprüfen der Verbindung des Fehlerstrom-Schutzschalters mit der Stromleitung und eine Schaltung zum Detektieren von Leckstrom umfasst, um das Vorhandensein eines Leckstroms zu prüfen, bevor das Betätigungselement zur Rückstellung des Fehlerstrom-Schutzschalters betätigt wird,
**dadurch gekennzeichnet,**
**dass** die Steuer/Regeleinrichtung durch Zwischenschalten eines Stromkreisunterbrechers, der geeignet ist, auf die Auslösung des Fehlerstrom-Schutzschalters folgend zu schließen, mit der Stromleitung verbunden ist.

2. Vorrichtung nach Anspruch 1, **dadurch gekennzeichnet, dass** die Steuer/Regeleinrichtung ferner eine Schaltung zum Detektieren des Vorliegens und des Werts der Stromversorgungsspannung umfasst.

3. Vorrichtung nach Anspruch 1, **dadurch gekennzeichnet, dass** die Steuer/Regeleinrichtung eine Steuer/Regeleinheit umfasst, die geeignet ist, das Betätigungselement anzutreiben.

4. Vorrichtung nach einem der vorhergehenden Ansprüche,
**dadurch gekennzeichnet, dass** die Steuer/Regeleinheit eine Stromversorgungsschaltung mit einer zentralen Abnahmestelle aufweist, die eine Spannung abnimmt, die gleich der Hälfte der Netzspannung entspricht, und die aufgrund des Erdungsfehlers, falls dieser vorhanden ist, an dem Netz erneut schließt.

5. Vorrichtung nach Anspruch 4, **dadurch gekennzeichnet, dass** das von der Netzspannung abgeleitete Signal, das für die Überprüfung verwendet wird, dem gepulsten einseitig gerichteten Typ entspricht.

6. Vorrichtung nach einem oder mehreren der vorhergehenden Ansprüche,
**dadurch gekennzeichnet, dass** das Betätigungselement ein Thermo-Betätigungselement ist.

7. Vorrichtung nach einem oder mehreren der vorhergehenden Ansprüche,
**dadurch gekennzeichnet, dass** diese eine Schaltung zum Schutz gegen Stromschläge umfasst.

8. Vorrichtung nach einem oder mehreren der vorhergehenden Ansprüche,
**dadurch gekennzeichnet, dass** die Schattung zum Prüfen der Verbindung der Rückstellvorrichtung mit der Stromleitung innerhalb der Rückstellvorrichtung elektrisch getrennt ist.

## Revendications

1. Dispositif de réenclenchement automatique, en particulier pour des disjoncteurs de courant résiduel et similaires, qui comprend un actionneur permettant de réenclencher automatiquement un disjoncteur de courant résiduel qui est connecté à une ligne électrique, en amont d'une charge, comprenant des moyens de commande adaptés pour actionner ledit actionneur, lesdits moyens de commande étant connectés en amont dudit disjoncteur de courant résiduel et en aval du disjoncteur de courant résiduel, en amont de ladite charge, afin de contourner ledit disjoncteur de courant résiduel, lorsque ledit disjoncteur de courant résiduel est déclenché, lesdits moyens de commande comprenant un circuit permettant de vérifier la connexion dudit dispositif de réenclenchement à la ligne électrique et un circuit permettant de détecter le courant de fuite, afin de vérifier la présence d'un courant de fuite, avant d'actionner ledit actionneur pour réenclencher ledit disjoncteur de circuit résiduel ; **caractérisé en ce que** lesdits moyens de commande sont connectés à ladite ligne électrique en intercalant un disjoncteur qui est approprié pour se fermer, suite au déclenchement dudit disjoncteur de courant résiduel.

2. Dispositif selon la revendication 1, **caractérisé en ce que** lesdits moyens de commande comprennent, en outre, un circuit permettant de détecter la présence et la valeur de la tension d'alimentation.

3. Dispositif selon la revendication 1, **caractérisé en ce que** lesdits moyens de commande comprennent une unité de commande qui est appropriée pour entraîner ledit actionneur.

4. Dispositif selon l'une quelconque des revendications précédentes, **caractérisé en ce que** lesdits moyens de commande comprennent un circuit d'alimentation ayant une prise centrale qui prélève une tension égale à la moitié de la tension du secteur et se referme sur ledit secteur en raison du défaut à la terre, le cas échéant.

5. Dispositif selon la revendication 4, **caractérisé en ce que** le signal utilisé pour ladite vérification, qui découle de la tension du secteur, est du type unidirectionnel pulsé.

6. Dispositif selon l'une quelconque des revendications précédentes, **caractérisé en ce que** ledit actionneur est un actionneur thermique.

7. Dispositif selon l'une quelconque des revendications précédentes, **caractérisé en ce qu'**il comprend un circuit pour la protection contre les chocs électriques.

8. Dispositif selon l'une quelconque des revendications précédentes, **caractérisé en ce que** ledit circuit permettant de commander la connexion dudit dispositif de réenclenchement à ladite ligne électrique est séparé électriquement à l'intérieur dudit dispositif de réenclenchement.
